# EUROPEAN PATENT APPLICATION

(11) **EP 3 798 602 A1**
(43) Date of publication of application: **31.03.2021**
(21) Application number: 19807997.2
(22) Date of filing: 17.05.2019
(51) Int. Cl.: G01M 17/007, G01C 21/34, G01M 15/10, G08G 1/00, G08G 1/137

(54) **ON-ROAD TRAVEL TEST SYSTEM, AND PROGRAM FOR ON-ROAD TRAVEL TEST SYSTEM**

(30) Priority: 21.05.2018 JP 2018097184
(71) Applicant: HORIBA, Ltd., Kyoto 601-8510 (JP)
(72) Inventor: KIHARA, Nobutaka, Kyoto-shi, Kyoto 601-8510 (JP); KITAMURA, Hiroyuki, Kyoto-shi, Kyoto 601-8510 (JP); MICHIKITA, Toshiyuki, Kyoto-shi, Kyoto 601-8510 (JP); YOSHIMURA, Sayaka, Kyoto-shi, Kyoto 601-8510 (JP)
(74) Representative: Müller Hoffmann & Partner
(86) International application number: PCT/JP2019/019668
(87) International publication number: WO 2019/225497

(57) **Abstract**

An on-road driving test system is provided that makes it possible to set a driving route that ensures the validity of the results of an on-road driving test and provides measurements accurately reflecting the performance of a vehicle. The on-road driving test system includes a determination condition storing unit, a vehicle speed storing unit, a predicted vehicle speed distribution calculating unit, and a determining unit. The determination condition storing unit stores a determination condition including at least a vehicle speed distribution condition for determining whether an on-road driving test is valid. The vehicle speed storing unit stores an actual measured vehicle speed actually measured at each geographical point by one or more vehicles. The predicted vehicle speed distribution calculating unit calculates a predicted vehicle speed distribution based on the actual measured vehicle speed, the predicted vehicle speed distribution being a vehicle speed distribution predicted to be obtained if a vehicle is driven on a set driving route. The determining unit determines whether the predicted vehicle speed distribution satisfies the vehicle speed distribution condition.

## Description

### Technical Field

The present invention relates to an on-road driving test system that analyzes exhaust emissions emitted from a vehicle during on-road driving, the fuel consumption of the vehicle, and others.

### Background Art

In related art, a vehicle test related to exhaust emissions from a vehicle is conducted by driving the vehicle on a chassis dynamometer in a driving mode that complies with, for example, the Worldwide harmonized Light vehicles Test Procedure (WLTP), and measuring, for example, the concentrations of various components of the exhaust emissions emitted at that time.

In some cases, the performance of a vehicle measured on a chassis dynamometer differs from the vehicle performance actually achieved during on-road driving. To address this problem, a vehicle test is conducted by using an on-road driving test method called Real Driving Emissions (RDE) (see PTL 1).

RDE requires that a vehicle be driven on-road in a manner that complies with predetermined test conditions. Examples of test conditions include test conditions such as driving time and trip composition (the distance shares of Urban, Rural, and Motorway driving), and emission-related test conditions based on methods such as Moving/Averaging Window (MAW) or Power Binning (Standardized Power Frequency Distribution (SPF)). If a test fails to satisfy these test conditions, the test is determined invalid, and the on-road driving test has to be conducted all over again.

Accordingly, the test conductor tries to set a driving route in advance in such a way that the above-mentioned test conditions are satisfied. However, the road condition, congestion, or other situations encountered during test execution are not constant, and thus setting an appropriate driving route is difficult in practice.

Even if an appropriate driving route is successfully set, the measurements taken by using such a route may not fully reflect the actual vehicle performance. This may result in a deviation between the driving test results and the vehicle performance actually experienced by the user. Consequently, the original purpose of introducing the on-road driving test may not be accomplished.

### Citation List

### Patent Literature

PTL 1: Japanese Unexamined Patent Application Publication No. 2016-001171

### Summary of Invention

### Technical Problem

The present invention has been made in view of the above-mentioned problems, and accordingly it is an object of the present invention to provide an on-road driving test system that makes it possible to set a driving route that ensures the validity of the results of an on-road driving test and provides measurements accurately reflecting the performance of a vehicle. Solution to Problem

An on-road driving test system according to the present invention includes: a determination condition storing unit that stores a determination condition, the determination condition including at least a vehicle speed distribution condition for determining whether an on-road driving test is valid; a vehicle speed storing unit that stores an actual measured vehicle speed or an estimated vehicle speed, the actual measured vehicle speed being a vehicle speed actually measured by one or more vehicles, the estimated vehicle speed being a vehicle speed based on traffic information; a predicted vehicle speed distribution calculating unit that, based on the actual measured vehicle speed or the estimated vehicle speed, calculates a predicted vehicle speed distribution, the predicted vehicle speed distribution being a vehicle speed distribution predicted to be obtained if a vehicle is driven on a set driving route; and a determining unit that determines whether the predicted vehicle speed distribution satisfies the vehicle speed distribution condition.

An on-road driving test method according to the present invention includes: a predicted vehicle speed distribution calculating step of calculating, based on an actual measured vehicle speed and an estimated vehicle speed, a predicted vehicle speed distribution, the actual measured vehicle speed being a vehicle speed actually measured by one or more vehicles, the estimated vehicle speed being a vehicle speed based on traffic information, the predicted vehicle speed distribution being a vehicle speed distribution predicted to be obtained if a vehicle is driven on a set driving route; and a determining step of determining whether the predicted vehicle speed distribution satisfies a vehicle speed distribution condition, the vehicle speed distribution condition being a condition for determining whether an on-road driving test is valid.

Accordingly, information about what vehicle speed distribution will be obtained if a vehicle is driven on a set driving route can be obtained as the predicted vehicle speed distribution. The determining unit is thus able to determine, as a determination result, whether the predicted vehicle speed distribution can satisfy the vehicle speed distribution condition, prior to or during an on-road driving test.

This makes it possible to obtain information indicating that a set driving route may possibly invalidate an on-road driving test if such a test is conducted by using the driving route, and to set another driving route in advance. This helps to prevent a situation encountered in related art in which, as a result of failure to satisfy the speed distribution condition being found out after the completion of the on-road driving test, an on-road driving test has to be performed all over again.

It is desired to ensure that, if a set driving route is likely to invalidate an on-road driving test due to failure to satisfy a determination condition, a new driving route is set automatically to increase the likelihood of the on-road driving test becoming valid. Accordingly, the on-road driving test system may be configured to further include a driving route creating unit that, in response to the predicted vehicle speed distribution being determined to not satisfy the vehicle speed distribution condition, create a new driving route.

In one example of more preferred implementations of the driving route creating unit, the driving route creating unit creates a new driving route based on the actual measured vehicle speed in such a way that the vehicle speed distribution condition is satisfied.

It is desired to ensure that whether a driving route satisfies a test condition related to trip composition can be determined with accuracy. Accordingly, the on-road driving test system may be configured such that the vehicle speed distribution condition includes an allowed vehicle speed distribution set for each of Urban, Rural, and Motorway sections.

Conditions to be satisfied in an on-road driving test include not only a vehicle speed distribution condition but also other conditions such as temperature, hardness, and atmospheric pressure. In this regard, it is desired to ensure that whether a set driving route allows these various conditions to be satisfied can be determined in advance to thereby further increase the probability of achieving a valid on-road driving test. Accordingly, the on-road driving test system may be configured as follows: the determination condition includes at least one of a temperature condition, an altitude condition, and an atmospheric pressure condition; the on-road driving test system further includes a predicted environmental parameter calculating unit that calculates a predicted environmental parameter, the predicted environmental parameter being an environmental parameter predicted to be obtained if a vehicle is driven on a set route, the predicted environmental parameter including at least one of a predicted temperature, a predicted altitude, and a predicted atmospheric pressure; and the determining unit is configured to determine whether the predicted environmental parameter satisfies the determination condition.

There are cases where, for example, a set driving route involves repeated altitude changes and thus places excessive load on the vehicle, causing the obtained performance results to be lower than true vehicle performance. It is desired to address this problem. Accordingly, the on-road driving test system may be configured as follows: the on-road driving test system further includes an exhaust emissions criterion storing unit that stores an exhaust emissions criterion, the exhaust emissions criterion being specified by a regulation as a criterion to be satisfied by exhaust emissions, and a predicted exhaust emissions data calculating unit that calculates predicted exhaust emissions data, the predicted exhaust emissions data being exhaust emissions data predicted to be obtained if a vehicle is driven on a set driving route; and the determining unit is configured to determine whether the predicted exhaust emissions data satisfies the exhaust emissions criterion.

It is desired to ensure that the predicted exhaust emissions data be estimated with improved accuracy to thereby enable a more accurate determination related to the validity of an on-road driving test conducted by using a set driving route. Accordingly, the on-road driving test system may be configured as follows: the on-road driving test system further includes an actual measured exhaust emissions data storing unit that stores actual measured exhaust emissions data actually measured by one or more vehicles; and the predicted exhaust emissions data calculating unit is configured to, based on the predicted vehicle speed distribution and the actual measured exhaust emissions data, calculate the predicted exhaust emissions data.

For example, road congestion changes due to seasonal factors or due to the influence of home-to-work and work-to-home commuting hours. It is desired to take such congestion or other situations into account and set a driving route that is likely to make an on-road driving test valid. Accordingly, the on-road driving test system may be configured as follows: the vehicle speed storing unit stores information in association with the actual measured speed, the information being related to a date and time when the actual measured speed is actually measured; and a predicted vehicle speed distribution is calculated based on the predicted vehicle speed distribution calculating unit, and, among the actual measured speeds, an actual measured speed corresponding to a date and time when a vehicle is driven on a set driving route.

It is desired to be able to determine in real time, during an on-road driving test, whether a set driving route makes the on-road driving test valid. Accordingly, the on-road driving test system may be configured such that the determining unit sequentially determines, during an on-road driving test of a vehicle, whether the predicted vehicle speed distribution satisfies the vehicle speed distribution condition.

It is desired to ensure that if a set driving route is likely to result in an invalid on-road driving test, then, for example, the driving route can be quickly changed to a new driving route in real time while the on-road driving test is conducted. Accordingly, the on-road driving test system may be configured such that the driving route creating unit creates a new driving route during an on-road driving test of a vehicle.

It is desired to be able to collect vehicle speeds or other information from plural vehicles as, for example, big data, so that based on the big data, a driving route that leads to a valid on-road driving test can be determined with improved accuracy, or that the probability of achieving a valid on-road driving test can be further increased for a newly set driving test. Accordingly, the on-road driving test system may be configured as follows: the on-road driving test system includes a vehicle-side apparatus installed in each of a plurality of vehicles, and a server including the determination condition storing unit, the vehicle speed storing unit, the predicted vehicle speed distribution calculating unit, the determining unit, and the driving route creating unit; the exhaust emissions analyzer includes a driving data transmitting unit that transmits driving data to the server, the driving data including at least vehicle location data and vehicle speed, the vehicle location data and vehicle speed being location data and speed of a vehicle during an on-road driving test, and a driving route display unit that acquires the newly set driving route from the driving route creating unit, and displays the driving route on a display provided to a vehicle; and the server is configured to receive the driving data transmitted from the exhaust emissions analyzer, and update the actual measured vehicle speed stored in the vehicle speed storing unit.

A specific example of the above-mentioned determination condition is a condition set based on Moving Average Window (MAW) or Standardized Power Frequency Distribution (SPF).

It is desired to ensure that functions or effects equivalent to those of the on-road driving test system according to the present invention can be achieved by installing a program into an existing on-road driving test system. Accordingly, a program for an on-road driving test system may be used. The program causes a computer to function as the following units: a determination condition storing unit that stores a determination condition, the determination condition including at least a vehicle speed distribution condition for determining whether an on-road driving test is valid; a vehicle speed storing unit that stores an actual measured vehicle speed or an estimated vehicle speed, the actual measured vehicle speed being a vehicle speed actually measured by one or more vehicles, the estimated vehicle speed being a vehicle speed based on traffic information; a predicted vehicle speed distribution calculating unit that, based on the actual measured vehicle speed or the estimated vehicle speed, calculates a predicted vehicle speed distribution, the predicted vehicle speed distribution being a vehicle speed distribution predicted to be obtained if a vehicle is driven on a set driving route; and a determining unit that determines whether the predicted vehicle speed distribution satisfies the vehicle speed distribution condition. The program for an on-road driving test system may be electronically distributed, or may be stored in or on a program storage medium such as a CD, a DVD, an HDD, or a flash memory.

It is desired to be able to collect various data from a large number of vehicles so that the collected data can be used as big data, or can be used to facilitate, for example, AI-based determination of driving test validity. Accordingly, a server that transmits and receives data to and from a vehicle-side apparatus installed in a vehicle, and constitutes an on-road driving test system may be used. The server includes: a determination condition storing unit that stores a determination condition, the determination condition including at least a vehicle speed distribution condition for determining whether an on-road driving test is valid; a vehicle speed storing unit that stores an actual measured vehicle speed, the actual measured vehicle speed being a vehicle speed actually measured by one or more vehicles; a predicted vehicle speed distribution calculating unit that, based on the actual measured vehicle speed, calculates a predicted vehicle speed distribution, the predicted vehicle speed distribution being a vehicle speed distribution predicted to be obtained if a vehicle is driven on a set driving route; and a determining unit that determines whether the predicted vehicle speed distribution satisfies the vehicle speed distribution condition.

An exemplary apparatus for a vehicle that is suited for use as a component of an on-road driving test system according to the present invention is a vehicle-side apparatus that is installed in a vehicle, transmits and receives data to and from a server, and constitutes an on-road driving test system, the server including a determination condition storing unit that stores a determination condition, the determination condition including at least a vehicle speed distribution condition for determining whether an on-road driving test is valid, a vehicle speed storing unit that stores an actual measured vehicle speed, the actual measured vehicle speed being a vehicle speed actually measured by one or more vehicles, a predicted vehicle speed distribution calculating unit that, based on the actual measured vehicle speed, calculates a predicted vehicle speed distribution, the predicted vehicle speed distribution being a vehicle speed distribution predicted to be obtained if a vehicle is driven on a set driving route, and a determining unit that determines whether the predicted vehicle speed distribution satisfies the vehicle speed distribution condition. The exhaust emissions analyzer includes a driving data transmitting unit that transmits driving data to the server, the driving data including at least vehicle location data and vehicle speed, the vehicle location data and vehicle speed being location data and speed of a vehicle during an on-road driving test.

### Advantageous Effects of Invention

As described above, the on-road driving test system according to the present invention makes it possible to, based on actual measured vehicle speeds obtained from plural vehicles or on vehicle speeds based on traffic information, whether a set driving route satisfies vehicle speed conditions and thus leads to a valid on-road driving test. This helps to prevent adoption of a driving route that has absolutely no chance of achieving a valid on-road driving test, thus preventing redoing of the on-road driving test and consequently wasting of acquired data such as exhaust emissions data.

### Brief Description of Drawings

[Fig. 1] Fig. 1 is a diagram illustrating an on-road driving test system according to a first embodiment of the present invention.
[Fig. 2] Fig. 2 is a diagram illustrating an on-board exhaust emissions analyzer constituting a part of the on-road driving test system according to the first embodiment.
[Fig. 3] Fig. 3 is a functional block diagram illustrating the functions of the exhaust emissions analyzer according to the first embodiment.
[Fig. 4] Fig. 4 is a functional block diagram illustrating the functions of a server according to the first embodiment.
[Fig. 5] Fig. 5 is a diagram illustrating vehicle speed categories and altitude conditions for an on-road driving test.
[Fig. 6] Fig. 6 is a diagram illustrating an overview of MAW.
[Fig. 7] Fig. 7 illustrates an exemplary driving route created by a driving route creating unit according to the first embodiment.
[Fig. 8] Fig. 8 is a flowchart illustrating an operation performed during collection of data by the on-road driving test system according to the first embodiment.
[Fig. 9] Fig. 9 is a flowchart illustrating an operation related to the determination of the validity of a driving route by the on-road driving test system according to the first embodiment.
[Fig. 10] Fig. 10 is a diagram illustrating an overview of SPF.

### Reference Signs List

- 200: on-road driving test system
- 100: exhaust emissions analyzer
- 13: analyzer body
- 14: camera
- 15: acceleration sensor
- 16: GPS
- 17: display
- 18: information processor
- 31: driving data acquiring unit
- 32: driving data transmitting unit
- 33: driving route storing unit
- 34: data receiving unit
- 35: driving route display unit
- 101: server
- 41: vehicle speed storing unit
- 42: actual measured exhaust emissions data storing unit
- 43: environmental information storing unit
- 44: driving route accepting unit
- 45: predicted vehicle speed distribution calculating unit
- 46: predicted exhaust emissions data calculating unit
- 47: predicted environmental parameter calculating unit
- 51: determination condition storing unit
- 52: exhaust emissions criterion storing unit
- 53: determining unit
- 54: driving route creating unit

### Description of Embodiments

An on-road driving test system 200 according to a first embodiment of the present invention will be described below with reference to the drawings. The on-road driving test system 200 according to the first embodiment is used for the driver of a vehicle V, who is the conductor of a test, to measure the components of exhaust emissions emitted from the vehicle V, fuel consumption, and others while driving the vehicle V on a public road.

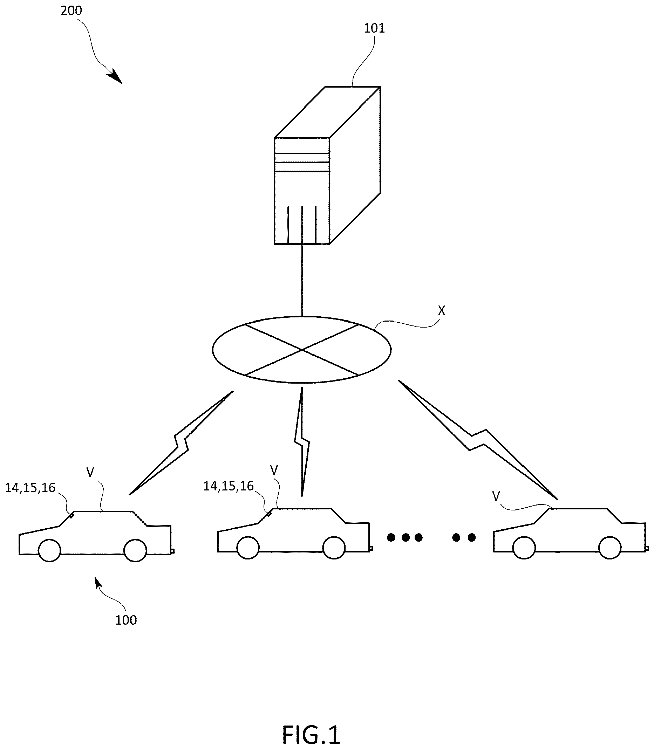

The on-road driving test system 200 includes a server 101, and plural vehicles V as illustrated in Fig. 1. The server 101 is capable of sending and receiving data via a network X. The vehicles V are capable of being connected to the server 101 via a wireless network. Each vehicle V is capable of transmitting, to the server 101, at least a vehicle speed achieved at each geographical point, in association with the corresponding location information. Examples of the vehicles V include "connected cars", vehicles V including a dashboard camera with communication capability, and vehicles V including an on-board exhaust emissions analyzer 100.

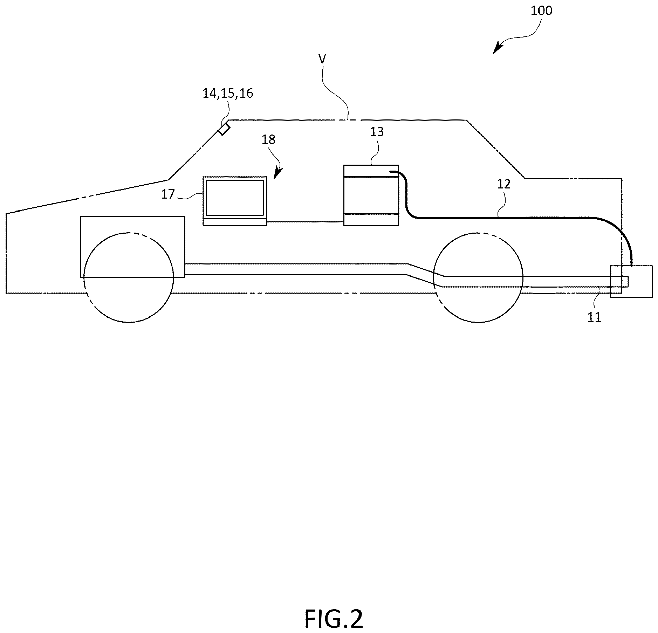

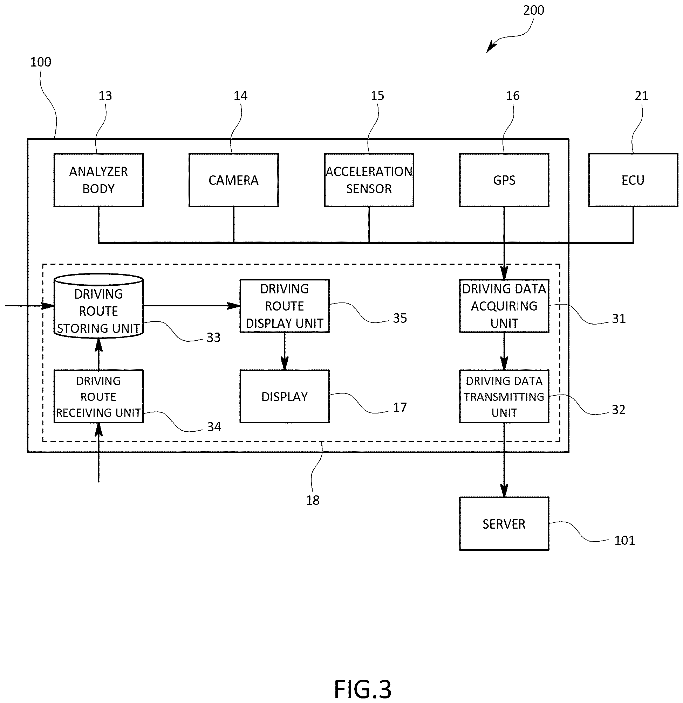

The on-board exhaust emissions analyzer 100, which is a type of vehicle-side apparatus, is now described with reference to Figs. 2 and 3.

As illustrated in Fig. 2, the on-board exhaust emissions analyzer 100 includes a hose 12, an analyzer body 13, a camera 14, an acceleration sensor 15, a GPS 16, and an information processor 18. The hose 12 is used to take in a portion of exhaust emissions from a tailpipe 11 of the vehicle V. The analyzer body 13 analyzes the exhaust emissions taken in through the hose 12. The camera 14 captures, for example, the condition in front of the vehicle V to generate image data. The acceleration sensor 15 detects the acceleration of the vehicle V. The GPS 16 detects the vehicle's location. The information processor 18 performs the following operations: processing data acquired by the analyzer body 13 or various sensors; exchanging data with the server 101; and displaying, on a display 17, a driving route for an on-road driving test.

The analyzer body 13 measures information such as the flow rate of exhaust emissions or the amount (or concentration) of CO, CO₂, H₂O, NOx, THC, CH₄, PN, PM, or other components contained in the exhaust emissions, and further calculates fuel consumption or other values from these pieces of information.

The information processor 18 is a general-purpose computer including the following components: a processor body incorporating, for example, a CPU, a memory, and a communication port; an input unit (not illustrated) such as a keyboard; and the display 17. The information processor 18 is installed inside the cabin of the vehicle V.

As the information processor 18 operates in accordance with a program used for the exhaust emissions analyzer, which is stored in a memory, the information processor 18 functions as at least a driving data acquiring unit 31, a driving data transmitting unit 32, a driving route storing unit 33, a driving route receiving unit 34, and a driving route display unit 35 as illustrated in Fig. 3.

The driving data acquiring unit 31 acquires, as driving data, information such as exhaust emissions flow rate, exhaust emission components, and fuel consumption via a communication port connected to the analyzer body 13. Further, the driving data acquiring unit 31 acquires, as driving data, information obtained from sensors or other devices provided to various parts of the vehicle V, such as engine rotation speed, vehicle speed, acceleration, throttle position, brake ON/OFF, intake/exhaust temperature, cooling water temperature, and engine torque, via a communication port connected to a communication line of, for example, an ECU 21 of the vehicle V. The driving data acquiring unit 31 also acquires, from the camera 14 provided inside the vehicle V, image data representing the condition during driving.

In some cases, if the driving data acquiring unit 31 is unable to directly obtain a piece of driving data, the driving data acquiring unit 31 may directly calculate the piece of driving data from the value of another piece of driving data. For instance, in some cases, if the driving data acquiring unit 31 is unable to obtain engine torque, the driving data acquiring unit 31 may look up a torque-rotation speed map stored in a memory and calculate engine torque from engine rotation speed and throttle position. Alternatively, a sensor may be provided separately to acquire other various pieces of driving data.

The driving data transmitting unit 32 transmits driving data acquired by the driving data acquiring unit 31 to the server 101 via the wireless network X, for example. It may suffice for driving data to include at least location data and vehicle speed of the vehicle V, and not all of data acquired by the driving data acquiring unit 31 needs to be transmitted. In one example, those pieces of driving data that have small data sizes or always need to be updated to the latest version may be transmitted sequentially as needed, whereas those pieces of driving data with large data sizes, such as image data captured by the camera 14, may be transmitted only when a predetermined trigger condition occurs, such as when an abnormality in acceleration indicative of a possible accident or other emergency occurs or when there is a request from the server 101.

The driving route storing unit 33 stores, for example, a driving route for an on-road driving test that is input by the test conductor by using an input/output device of the information processor 18. If, as will be described later, another driving route is created in the server 101 and received by the driving route receiving unit 34, the driving route is also stored into the driving route storing unit 33.

The driving route display unit 35 displays, on the display 17, a driving route stored in the driving route storing unit 33, in such a way that the driving route is overlaid on a map. At this time, based on location information of the vehicle V, map data of the vicinity of the present location, data representing road congestion, and other pieces of data are received sequentially as needed, and based on the received data, a map is created, and a driving route is displayed on the map.

Vehicles V not provided with the exhaust emissions analyzer 100 are each equipped with a vehicle-side apparatus including the corresponding components excluding, for example, the analyzer body 13. Driving data obtained from each of these vehicles V is transmitted to the server 101 via the driving data transmitting unit 32. That is, the server 101 is configured to acquire, from plural vehicles V, driving data of each vehicle V via the network X. These pieces of data obtained from the vehicles V are accumulated into the server 101, and collected as big data.

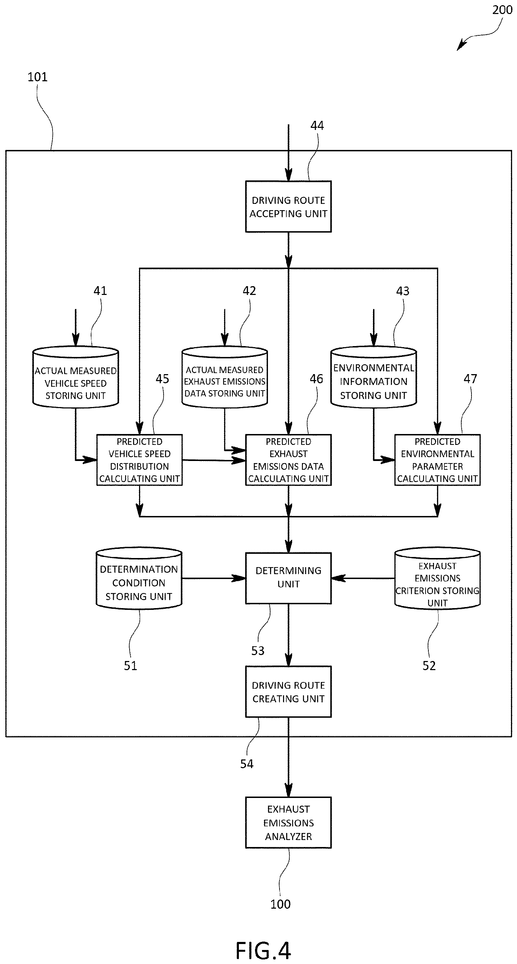

Now, the server 101 is described below with reference to Fig. 4.

The server 101 serves the function of collecting and accumulating driving data acquired by each vehicle V, and the function of verifying, based on the accumulated driving data, whether a driving route is appropriate for conducting an on-road driving test, or providing each vehicle V with a driving route that allows for a valid on-road driving test.

More specifically, the server 101 is configured to, through the cooperation of various devices upon execution of a server program stored in a memory, function as at least the following units as illustrated in Fig. 4: a vehicle speed storing unit 41, an actual measured exhaust emissions data storing unit 42, an environmental information storing unit 43, a driving route accepting unit 44, a predicted vehicle speed distribution calculating unit 45, a predicted exhaust emissions data calculating unit 46, a predicted environmental parameter calculating unit 47, a determination condition storing unit 51, an exhaust emissions criterion storing unit 52, a determining unit 53, and a driving route creating unit 54.

These units are not described in detail.

The vehicle speed storing unit 41 stores an actual measured vehicle speed, which has been actually measured by the vehicle V at each geographical point and transmitted to the server 101. In this regard, actual measured vehicle speed may be limited only to a value actually measured during an on-road driving test, or may be a value actually measured on a vehicle V for which an on-road driving test has not been conducted. Actual measured vehicle speed is, for example, data in which longitude, latitude, geoid, and other location information measured by the GPS 16 provided to the vehicle V are associated with a vehicle speed achieved at a geographical point represented by each piece of location information, and the corresponding date and time. Alternatively, the vehicle speed storing unit 41 may store not only a value actually measured on each vehicle V, but also an estimated vehicle speed estimated from traffic information, which is a vehicle speed estimated to be achieved at each geographical point.

The actual measured exhaust emissions data storing unit 42 stores actual measured exhaust emissions data transmitted to the server 101 from those of the vehicles V that include the exhaust emissions analyzer 100. The actual measured exhaust emissions data represent information such as the concentrations of various components of exhaust emissions. In actual measured exhaust emissions data, longitude, latitude, geoid, and other location information measured by the GPS 16 are associated with information such as the concentrations of various emission components actually measured at a geographical point represented by each piece of location information, the type of the corresponding vehicle V, and the corresponding date and time.

Actual measured vehicle speed and actual measured exhaust emissions data such as those mentioned above are accumulated into the server 101 in, for example, a data format as illustrated in Table 1, based on data obtained from each vehicle V that includes the exhaust emissions analyzer 100. In this regard, for driving data transmitted from a vehicle V not provided with the exhaust emissions analyzer 100, no measured exhaust emissions value is stored. Alternatively, based on obtained vehicle specifications and an obtained vehicle speed at each geographical point, an estimated exhaust emissions value may be calculated and stored instead of a measured exhaust emissions value.

**[Table 1]**

| On-map location information | | | Actual measured information | | | | | | |
|---|---|---|---|---|---|---|---|---|---|
| Longitude | Latitude | Geoid | Date and time | Vehicle speed | Acceleration | Measured exhaust emissions value | Atmospheric pressure | Temperature | Vehicle specifications |
| λ1 | Φ1 | G1 | t11 | V11 | A11 | M11 | P11 | T11 | C11 |
| | | | t12 | V12 | A12 | M12 | P12 | T12 | C12 |
| | | | t13 | V13 | A13 | M13 | P13 | T13 | C13 |
| | | | .................................. | | | | | | |
| | | | t1n1 | V1n1 | A1n1 | | P1n1 | T1n1 | C1n1 |
| λ2 | Φ2 | G2 | t21 | V21 | A21 | | P21 | T21 | C21 |
| | | | t22 | V22 | A22 | | P22 | T22 | C22 |
| | | | t23 | V23 | A23 | | P23 | T23 | C23 |
| | | | .................................. | | | | | | |
| | | | t2n2 | V2n2 | A2n2 | | P2n2 | T2n2 | C2n2 |
| | | | | | | | | | |
| λm | Φm | Gm | tm1 | Vm1 | Am1 | | Pm1 | Tm1 | Cm1 |
| | | | tm2 | Vm2 | Am2 | | Pm2 | Tm2 | Cm2 |
| | | | tm3 | Vm3 | Am3 | | Pm3 | Tm3 | Cm3 |
| | | | .................................. | | | | | | |
| | | | tmnm | Vmnm | Amnm | | Pmnm | Tmnm | Cmnm |

The environmental information storing unit 43 acquires environmental data, such as atmospheric pressure, weather, and temperature at each geographical point, from a data source such as a database of meteorological information provided by, for example, a public agency, and stores the acquired environmental data. For environmental data as well, location information including altitude at each geographical point is associated with information such as atmospheric pressure, weather, temperature, and date and time. As for environmental data, for example, data obtained from vehicles V driven in a geographical region where an on-road driving test system is conducted may be collected, or data obtained from various sensors installed within other geographical regions may be collected.

The driving route accepting unit 44 accepts, for example, data related to an initial driving route that the test conductor has set on the vehicle V for the purpose of a vehicle driving test. Based on location information of each geographical point that the vehicle V passes on the accepted driving route, the predicted vehicle speed distribution calculating unit 45, the predicted exhaust emissions data calculating unit 46, and the predicted environmental parameter calculating unit 47 described later respectively acquire the corresponding pieces of data from the storing units 41, 42, and 43, and calculate the corresponding predicted values.

More specifically, the predicted vehicle speed distribution calculating unit 45 calculates a predicted vehicle speed distribution based on an actual measured vehicle speed or estimated vehicle speed stored in the server 101. The predicted vehicle speed distribution is a vehicle speed distribution predicted to be obtained if the vehicle V is driven on a set driving route. For example, the mean of values stored for each geographical point on a driving route is calculated as a predicted vehicle speed for the geographical point. In the first embodiment, a driving distance is calculated based on a predicted vehicle speed for each of the Urban, Rural, and Motorway categories on a set driving route, which are vehicle speed categories for an on-road driving test described later. That is, for each portion of the driving route set as the corresponding vehicle speed category, a predicted driving distance is calculated by multiplying a predicted vehicle speed at each location by a predicted duration thereof. Then, the predicted vehicle speed distribution calculating unit 45 calculates the predicted driving distance share of each of the Urban, Rural, and Motorway sections.

The predicted exhaust emissions data calculating unit 46 calculates predicted exhaust emissions data. The predicted exhaust emissions data represents, for example, the concentrations of various components of exhaust emissions predicted to be emitted by the vehicle V at each location when driven on a driving route set based on the predicted vehicle speed distribution calculated by the predicted vehicle speed distribution calculating unit 45. More specifically, from the performance specifications and predicted vehicle speed of the vehicle V, the concentrations of components such as CO₂ emitted at each geographical point on the driving route are estimated as predicted exhaust emissions data. If actual measured exhaust emissions data is stored in the server 101 with respect to a given geographical point on the driving route, predicted exhaust emissions data may be calculated based on the actual measured exhaust emissions data. Based on the predicted CO₂ concentration on a set driving route, predicted average CO₂ concentrations are calculated for individual windows in accordance with the same calculation criteria as those used for MAW described later, and obtained as predicted window data. In the absence of any actual measured exhaust emissions data, predicted exhaust emissions data may be calculated by using an estimated value calculated based on vehicle specifications and a vehicle speed that are stored in the server 101.

In calculating predicted vehicle speed and predicted exhaust emissions data, for example, only data actually measured on a vehicle model identical to the vehicle model on which to conduct an on-road driving test may be used, or only data actually measured during a time of day when an on-road driving test is conducted may be used. Further, the predicted vehicle speed may be calculated by acquiring information such as road congestion from an external database or other information sources, and taking the influence of congestion or other factors into account.

The predicted environmental parameter calculating unit 47 calculates predicted environmental parameters based on environmental data stored in the server 101. The environmental parameters include altitude, predicted temperature, predicted altitude, and predicted atmospheric pressure at each geographical point as the vehicle V is driven on a set driving route. In the first embodiment, the predicted environmental parameter calculating unit 47 calculates a predicted temperature range for a driving route, the maximum altitude difference of the driving route for the entire trip, the predicted altitude difference between the start and goal points of the driving route, and a predicted cumulative positive altitude gain.

The determination condition storing unit 51 stores determination conditions including: a vehicle speed distribution condition related to trip composition, which is used to determine the validity of an on-road driving test; and a criterion that represents a test condition related to emission and needs to be satisfied in accordance with RDE regulations or Moving Average Window (MAW), which is a specific evaluation-value conversion and calculation method. As will be described later in detail, for an on-road driving test, plural conditional parameters need to be simultaneously satisfied. These conditional parameters may be affected by road congestion or various other factors.

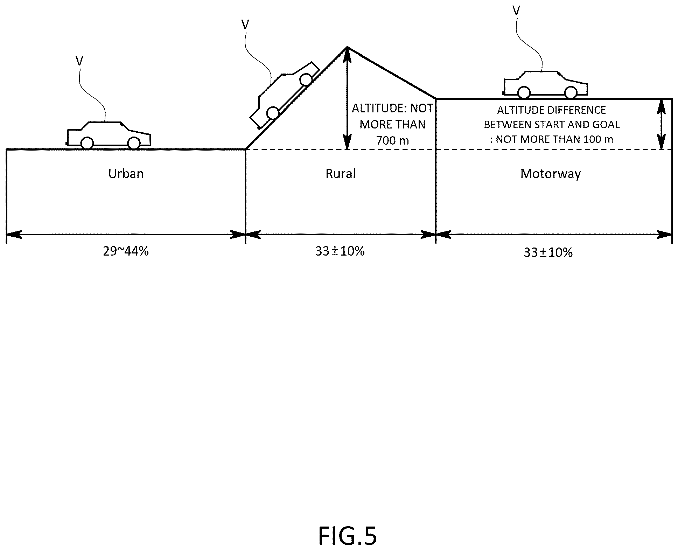

More specifically, determination criteria related to trip dynamics will be described below. As illustrated in Fig. 5, in a vehicle driving test, the vehicle needs to be driven on a driving route including the three following sections: Urban, Rural, and Motorway. In this regard, "Urban" refers to a section to be driven at a speed not more than 60 km/h, "Rural" refers to a section to be driven at a speed not less than 60 km/h and not more than 90 km/h, and "Motorway" refers a section to be driven at a speed not less than 90 km/ and not more than 115 km/h.

Each vehicle speed category needs to cover a minimum driving distance of 16 km. Further, the driving distance shares are required to be within 29 to 44% for the Urban section, 33 ± 10% for the rural section, and 33 ± 10% for the Motorway section.

Accordingly, the determination condition storing unit 51 according to the first embodiment stores a vehicle speed distribution as a vehicle speed condition such that the shares of distances driven in the Urban, Rural, and Motorway sections respectively correspond to 29 to 44%, 33 ± 10%, and 33 ± 10%.

Other requirements include that the average vehicle speed of the Urban section be between 15 and 40 km/h, and that the stop periods account for 6 to 30% of the Urban driving time. The Motorway section needs to be driven at a speed above 100 km/h for at least 5 minutes, with the driving speed being required to not exceed 145 km/h. Accordingly, for the Urban and Motorway vehicle speed categories, the determination condition storing unit 51 further stores vehicle speed limits and required durations as the corresponding determination conditions related to vehicle speed. In addition, the duration of driving for the entire trip during a driving test of the vehicle V needs to be 90 to 120 minutes. Accordingly, the determination condition storing unit 51 stores the total trip duration limit described above.

Further, as illustrated in Fig. 5, RDE requires that the altitude difference of a driving route for the entire trip be not more than 700 m, and that the altitude difference between the start and goal points be not more than 100 m. Other requirements include that the cumulative positive altitude gain be not more than 1200 m for every 100 km driven. Accordingly, the determination condition storing unit 51 stores these values as altitude limits.

In addition, as for the outside temperature as well, RDE requires that the outside temperature be within a range of 3 to 30°C during the entire trip. Accordingly, the determination condition storing unit 51 stores, as an outside temperature condition, a permitted range of change in outside temperature during driving on a set driving route. The determination criteria described above are illustrative only, and these values may be changed in accordance with, for example, changes in regulations, or the internal rules of individual companies. Further, it is possible to change the values serving as determination conditions in accordance with legal revisions or criteria set by each individual country.

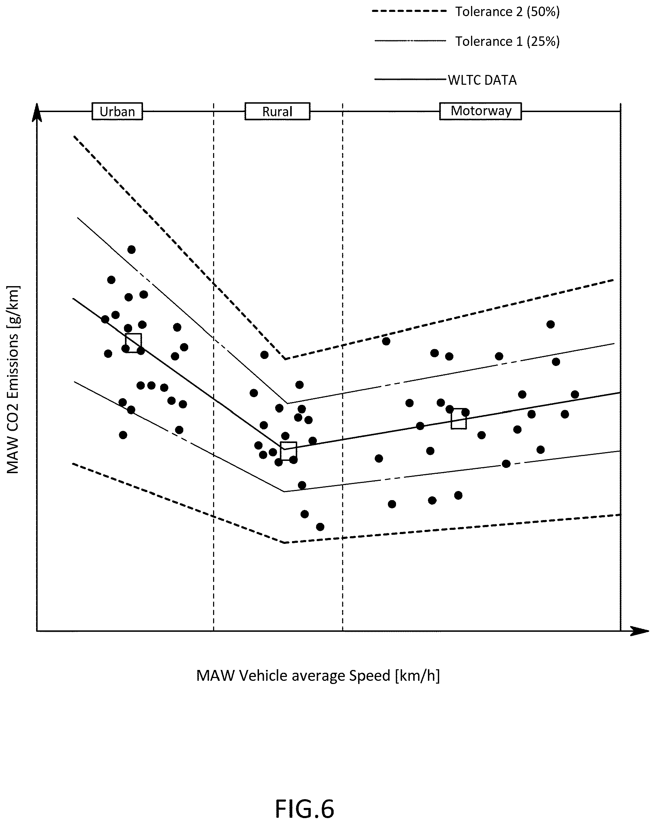

The following describes conditions to be satisfied for MAW, which is a method for calculating evaluation values of exhaust emissions. In MAW, a moving average is calculated every one second for data included in each single window, the length of each window being defined as the duration of time until the cumulated CO₂ value of exhaust emissions obtained in each of the Urban, Rural, and Motorway vehicle speed categories reaches the half of the amount of CO₂ emitted by the vehicle driven over the WLTC. Fig. 6 represents pieces of window data each plotted as a pair of average CO₂ value and average vehicle speed calculated for each window obtained as described above. For MAW to be determined valid, each of the vehicle speed categories of Urban, Rural, and Motorway needs to include at least 15% of the total number of pieces of window data. Another requirement is that at least 50% of window data included in each vehicle speed category be within Tolerance 1 representing a tolerance of ±25% around the CO₂ characteristic curve (the thick middle line in Fig. 6).

As for the determination condition related to the number of these window data points, in addition to vehicle speed, the evaluation value of emitted exhaust emissions also serves as a criterion, and is thus stored by the exhaust emissions criterion storing unit 52 as an exhaust emissions criterion. In this regard, an exhaust emissions criterion is not limited to a condition for determining the validity of MAW but may be, for example, an emission criterion value separately designated by law as an environmental criterion.

The determining unit 53 determines whether, if the vehicle V is driven on a set driving route, various predicted values calculated by the predicted vehicle speed distribution calculating unit 45, the predicted environmental parameter calculating unit 47, and the predicted exhaust emissions data calculating unit 46 can satisfy a determination condition and an exhaust emissions criterion that are stored in the determination condition storing unit 51 and the exhaust emissions criterion storing unit 52, and can thus make the on-road driving test valid. The determination related to the validity of an on-road driving test is performed by the determining unit 53 before the on-road driving test using the vehicle V is conducted. Further, the determination of validity is repeated sequentially as needed also during the on-road driving test so that changes in state such as congestion can be taken into account during the on-road driving test.

The driving route creating unit 54 creates, in response to the determining unit 53 determining that a set driving route does not lead to a valid on-road driving test, a new driving route based on actual measured values stored in the server 101, so that the on-road driving test becomes valid.

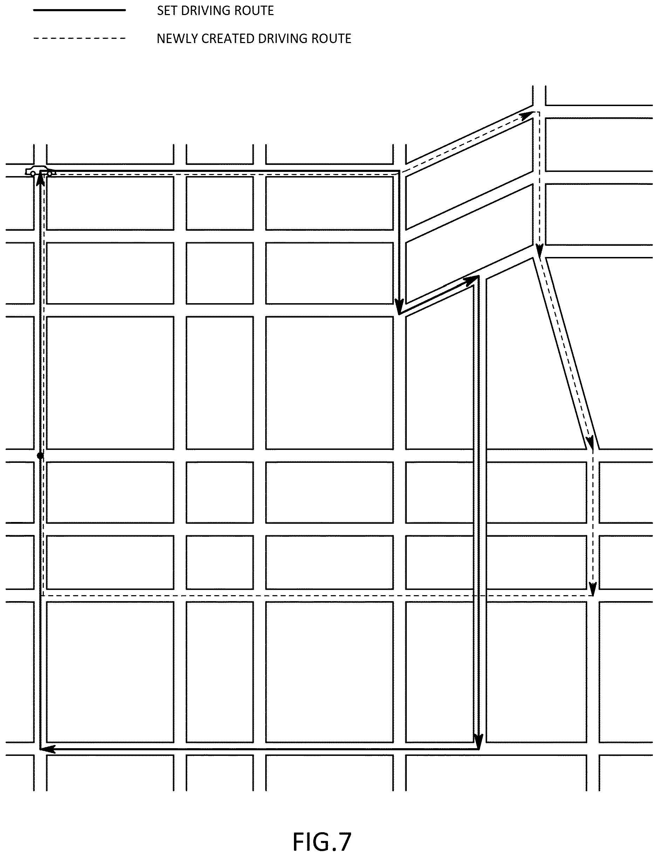

That is, by using various information stored in the server 101 as input data and constraints, the driving route creating unit 54 outputs a new driving route as illustrated in Fig. 7 as output data. More specifically, such data used as input data include the following pieces of information: actual measured values stored in the vehicle speed storing unit 41, the environmental information storing unit 43, and the actual measured exhaust emissions data storing unit 42; location information of the start and goal points of a set driving route; and a planned date and time for an on-road driving test. As the constraints, plural determination conditions and plural exhaust emissions criteria that are stored in the determination condition storing unit 51 and the exhaust emissions criterion storing unit 52 are used. As for such a constraint, for example, a condition may be set such that the greater the overlap of a created driving route with a set driving route, the better the created driving route. Alternatively, the driving route creating unit 54 may be implemented as an AI configured to, based on input data accumulated as big data, create a new driving route in such a way as to satisfy plural constraints. For example, the driving route creating unit 54 may propose plural driving routes, and in response to the test conductor selecting a driving route, the driving route creating unit 54 may raise the evaluation value of the selected driving route to thereby improve the accuracy of driving route creation.

The new driving route created by the driving route creating unit 54 in this way is transmitted to the on-board exhaust emissions analyzer 100 installed aboard the vehicle V, and displayed by the display 17 in such a way that, for example, the driving route is overlaid on a map. Notification of a driving route may be provided to the test conductor not only by display of the driving route on the display 17 but also by using, for example, voice guidance or a symbol such as an arrow. Alternatively, information related to an on-road driving test, such as a driving route or the vehicle speed to be achieved at a travel point, may be displayed on the windshield or other areas of the vehicle V.

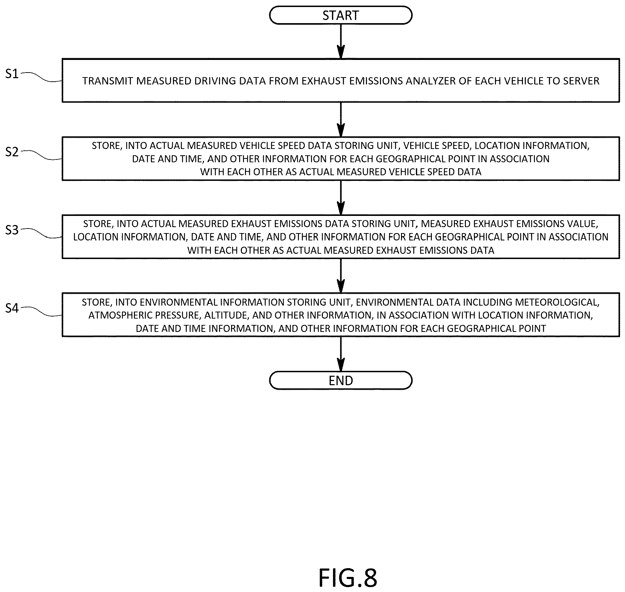

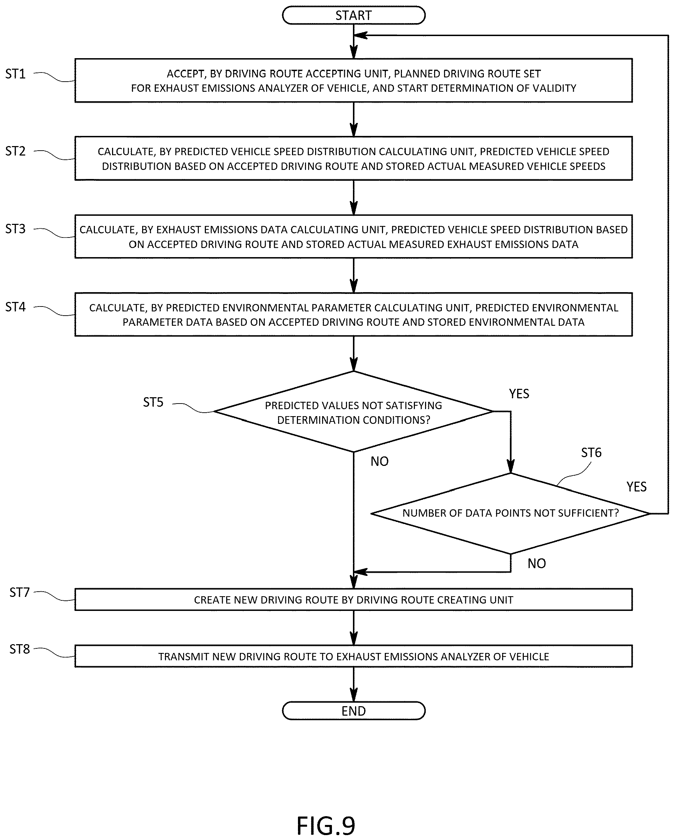

The following describes, with reference to Figs. 8 and 9, how the on-road driving test system 200 according to the first embodiment operates. First, an operation for accumulating driving data obtained from plural vehicles V and creating big data is described with reference to Fig. 8.

Various vehicle-side apparatuses installed in plural vehicles V transmit, to the server 101, driving data including location information of the location where each vehicle V is being driven, and the speed of the vehicle at that time (step S1). For some vehicles V equipped with the exhaust emissions analyzer 100, further, exhaust emissions data to be measured is measured sequentially as needed, and such exhaust emissions data is also transmitted to the server 101.

The location information measured on the vehicles V, the vehicle speed at that time, and time data such as date and time are accommodated into the vehicle speed storing unit 41 in association with each other (step S2).

As for those pieces of exhaust emissions data that are measured on the vehicles V equipped with the exhaust emissions analyzer 100, the values of these pieces of data are accumulated into the actual measured exhaust emissions data storing unit 42 in association with location information representing the location where each value is measured (step S3).

As for meteorological or other environmental data that may not be obtained from each vehicle V, such environmental data is obtained from another public database via the network X, and accumulated into the environmental information storing unit 43 in association with the location information (step S4). For steps S2 to S4, updating and accumulation of data are repeated sequentially as needed to thereby create big data.

With reference to the flowchart of Fig. 9, a description is now given of an operation for determining the validity of a driving route set for an on-road driving test.

When the driving route accepting unit 44 of the server 101 accepts a planned driving route via the exhaust emissions analyzer 100 of the vehicle V on which to conduct an on-road driving test, a determination of the validity of the driving route is started (step ST1).

First, the predicted vehicle speed distribution calculating unit 45 of the server 101 calculates, based on an actual measured vehicle speed or estimated vehicle speed, a predicted vehicle speed for each individual geographical point on the accepted driving route. As a result, a predicted vehicle speed distribution is obtained, the predicted vehicle speed distribution representing predicted vehicle speeds at individual geographical points on the driving route (step ST2).

The predicted exhaust emissions data calculating unit 46 calculates predicted exhaust emissions data at each geographical point on the accepted driving route, based on the predicted vehicle speed at each geographical point calculated by the predicted vehicle speed distribution calculating unit 45 (step ST3). In addition, the predicted environmental parameter calculating unit 47 calculates a predicted temperature range, a predicted altitude difference, and a predicted cumulative positive altitude gain for the accepted driving route (step ST4). In the first embodiment, the predicted exhaust emissions data is handled as window data used in MAW.

Once various predicted values for each individual geographical point on the accepted driving route are calculated, the determining unit 53 determines whether the predicted vehicle speed distribution, the predicted temperature range, the predicted altitude difference, and the predicted cumulative positive altitude gain satisfy trip composition and other various conditions required for an RDE test to be determined valid (step ST5). Further, the determining unit 53 determines whether a set driving route makes it possible to satisfy an emission-related test condition. That is, the determining unit 53 determines, for plural pieces of predicted window data, the presence or absence of the required number of data points within a predetermined data range, thereby determining whether MAW can be valid (step ST6).

If it is determined by the determining unit 53 at step ST5 or ST6 that MAW is not valid, then based on a set driving route or actual measured values accumulated in the server 101, the driving route creating unit 54 creates a new driving route in such a way that determination criteria such as trip composition, and emission-related test conditions or exhaust emissions criteria are satisfied (step ST7).

The new driving route created is transmitted from the server 101 to the vehicle V of interest. Then, the test conductor conducts an on-road driving test by using the new driving route (step ST8).

As for steps ST1 to ST8, these operations may be repeated sequentially as needed during an on-road driving test so that the driving route used for the vehicle V is updated while the on-road driving test is conducted.

The on-road driving test system 200 configured as described above is capable of previously determining, prior to the completion of an on-road driving test, whether a set driving route satisfies determination conditions, such as vehicle speed distribution condition, vehicle speed limit, required duration, trip duration limit, altitude limit, and permitted temperature change range, as well as exhaust emissions criteria, and thus leads to a valid on-road driving test.

For example, if it is determined by the determining unit 53 prior to an on-road driving test that a driving route input to the server 101 invalidates the on-road driving test, the driving route can be changed to a new driving route that is created by the driving route creating unit 54 and is likely to make the test valid.

This makes it possible to prevent a situation encountered in related art in which, after an on-road driving test is completed, data analysis is performed to determine whether the obtained data satisfies determination conditions or exhaust emissions criteria, and as a result of the obtained data being determined as not satisfying these conditions, the on-road driving test ends up being conducted all over again.

With the on-road driving test system 200 according to the first embodiment, actual measured values obtained from plural vehicles V are accumulated into the server 101 as big data. This makes it possible to increase the accuracy of prediction of various predicted values, or the accuracy of a determination performed by the determining unit 53 with respect to the validity of an on-road driving test.

Further, with the on-road driving test system 200 according to the first embodiment, even in the middle of an on-road driving test conducted by using the vehicle V, the validity of a set driving route is determined by the server 101 sequentially as needed to thereby determine whether there is no problem with continuing the on-road driving test by using the set driving route. This ensures that even if congestion or other situations change due to, for example, a sudden accident or other causes during an on-road driving test, it is possible to change the driving route during the test to increase the chance of achieving a valid test.

The on-road driving test system 200 according to a second embodiment is now described.

Although the on-road driving test system 200 according to a second embodiment includes components substantially similar to those of the on-road driving test system 200 according to the first embodiment, the determining unit 53 of the on-road driving test system 200 according to the second embodiment uses a different determination criterion so that exhaust emissions can be evaluated not by MAW but by SPF (also called "power binning").

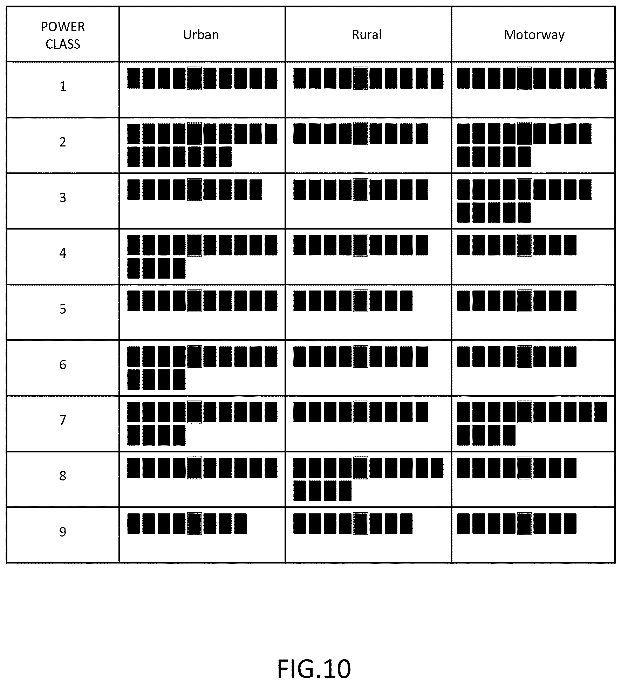

That is, in SPF, 3-second moving averages are taken for test data during on-road driving to thereby calculate average exhaust emissions, average tire driving force, and average vehicle speed. These pieces of moving average data are classified into nine power classes set based on vehicle specifications as illustrated in Fig. 10. As one example condition for SPF calculation results to be valid, at least five data points need to be obtained for a specific power class in the Urban, Rural, and Motorway vehicle speed categories.

Accordingly, the predicted vehicle speed distribution calculating unit 45 according to the second embodiment is configured to calculate predicted vehicle speeds at various locations on a driving route based on actual measured vehicle speeds accumulated in the server 101, and then classify the predicted vehicle speeds into nine power classes for each of the Urban, Rural, and Motorway vehicle speed categories to thereby calculate a predicted vehicle speed distribution.

The determination condition storing unit 51 according to the second embodiment stores the following condition as a vehicle speed distribution condition: for each of the Urban, Rural, and Motorway vehicle speed categories, at least five data points need to exist for the nine power classes.

The determining unit 53 according to the second embodiment determines not only whether vehicle speed-related conditions to be satisfied for RDE as described above with reference to the first embodiment are satisfied, but also whether the above-mentioned vehicle speed distribution condition, namely that the predicted vehicle speed distribution calculated for SPF needs to have at least five data points in each power class, is satisfied.

With the on-road driving test system 200 according to the second embodiment configured as described above, it is possible to previously determine, prior to an on-road driving test, whether a set driving route makes it possible to achieve not only conditions to be satisfied for RDE but also conditions to be satisfied for Power Binning, which specifies a method for calculating the evaluation values of exhaust emissions and other values.

If neither of these conditions is satisfied, the driving route creating unit 54 creates a separate driving route that is likely to allow these conditions to be satisfied. This makes it possible to increase the likelihood of a valid on-road driving test being achieved in a single execution.

Other embodiments are now described.

In each of the embodiments above, the on-road driving test system is implemented by a combination of an exhaust emissions analyzer equipped to each vehicle, and a server. If, for example, only the validity of RDE needs to be determined for a predetermined driving route, then the on-road driving test system may include only a server or a single computer.

In each of the embodiments above, functions of advance determination of the validity of a driving route and resetting of a driving route that has no chance of achieving a valid on-road driving test are implemented by the server. Alternatively, however, all of such functions may be implemented by using the computing power of a computer constituting an exhaust emissions analyzer provided to a vehicle.

That is, the physical locations of various components are not limited to those described above with reference to the embodiments above.

As described above, the driving route creating unit creates a driving route in such a way as to satisfy various determination conditions established by test rules or other regulations as conditions for determining the validity of a test. In this regard, the conditions to be satisfied may further include other additional conditions.

For example, the driving route creating unit may be configured to create a driving route in such a way as to satisfy determination conditions used for determining the validity of an on-road driving test during the test, while at the same time ensuring that the maximum load be placed on the vehicle. This is for the following reason: even if an on-road driving test qualifies as valid, it is possible that because the load placed on the vehicle is small, very small amounts of exhaust emission components are emitted, and champion data may be obtained as a result. Even if such data is obtained as a result, the problem of large deviation between the test results and the fuel consumption, environmental performance, or other performance features during actual use, which is the original motivation for introducing the on-road driving test, may not be addressed. Accordingly, learning control by AI may be performed such that, as a condition for creating a driving route, the driving route to be output maximizes the predicted cumulative positive altitude gain, or is expected to result in the maximum amount of exhaust emissions based on actual measured exhaust emissions data.

The on-road driving test system may not include functions corresponding to the determining unit that determines the validity of an on-road driving test conducted by using a set driving route, and the driving route creating unit that creates a driving route that satisfies various determination conditions, but may be configured to include only a function corresponding to the predicted exhaust emissions data calculating unit. This makes it possible to previously simulate on a computer how much exhaust emissions will be emitted if a set driving route is used, without having to perform actual measurements. For example, it may be conceivable to, based on such simulation, create base data for environmental measures, or employ the obtained data as an index to be used for, for example, designing a new vehicle.

In the embodiments above, the determining unit determines whether a set driving route satisfies all determination conditions. Alternatively, the determining unit may be configured to at least determine whether a predicted vehicle speed distribution satisfies a vehicle speed distribution condition. That is, by allowing the validity of a driving route to be determined based solely on a simple index, the computation load associated with the determination may be reduced to facilitate real-time driving route updates. Further, limiting determination condition parameters as described above may make it possible to, for example, prevent excessive learning or other problems associated with the use of AI, thus increasing the likelihood of obtaining a more appropriate driving route.

The present invention can be used not only for real-time determination of the validity of a vehicle driving test but also for desk route setting.

It is to be noted that various other combinations of, or modifications to, the disclosed embodiments may be made without departing from the scope of the present invention.

### Industrial Applicability

As described above, the present invention makes it possible to provide an on-road driving test system capable of, based on actual measured vehicle speeds obtained from plural vehicles or on vehicle speeds based on traffic information, determining whether a set driving route satisfies vehicle speed conditions and thus leads to a valid on-road driving test. Further, the present invention makes it possible to prevent adoption of a driving route that has absolutely no chance of achieving a valid on-road driving test, thus preventing redoing of the on-road driving test and consequently wasting of acquired data such as exhaust emissions data.

## Claims

1. An on-road driving test system comprising:
a determination condition storing unit that stores a determination condition, the determination condition including at least a vehicle speed distribution condition for determining whether an on-road driving test is valid;
a vehicle speed storing unit that stores an actual measured vehicle speed or an estimated vehicle speed, the actual measured vehicle speed being a vehicle speed actually measured by one or more vehicles, the estimated vehicle speed being a vehicle speed based on traffic information;
a predicted vehicle speed distribution calculating unit that, based on the actual measured vehicle speed or the estimated vehicle speed, calculates a predicted vehicle speed distribution, the predicted vehicle speed distribution being a vehicle speed distribution predicted to be obtained if a vehicle is driven on a set driving route; and
a determining unit that determines whether the predicted vehicle speed distribution satisfies the vehicle speed distribution condition.

2. The on-road driving test system according to claim 1, further comprising a driving route creating unit that, in response to the predicted vehicle speed distribution being determined to not satisfy the vehicle speed distribution condition, create a new driving route.

3. The on-road driving test system according to claim 2, wherein the driving route creating unit creates a new driving route based on the actual measured vehicle speed in such a way that the vehicle speed distribution condition is satisfied.

4. The on-road driving test system according to any one of claims 1 to 3,
wherein the vehicle speed distribution condition comprises an allowed vehicle speed distribution set for each of Urban, Rural, and Motorway sections.

5. The on-road driving test system according to any one of claims 1 to 4,
wherein the determination condition includes at least one of a temperature condition, an altitude condition, and an atmospheric pressure condition,
wherein the on-road driving test system further comprises a predicted environmental parameter calculating unit that calculates a predicted environmental parameter, the predicted environmental parameter being an environmental parameter predicted to be obtained at each geographical point if a vehicle is driven on a set route, the predicted environmental parameter including at least one of a predicted temperature, a predicted altitude, and a predicted atmospheric pressure, and
wherein the determining unit is configured to determine whether the predicted environmental parameter satisfies the determination condition.

6. The on-road driving test system according to any one of claims 1 to 5, further comprising:
an exhaust emissions criterion storing unit that stores an exhaust emissions criterion, the exhaust emissions criterion being specified by a regulation as a criterion to be satisfied by exhaust emissions; and
a predicted exhaust emissions data calculating unit that calculates predicted exhaust emissions data, the predicted exhaust emissions data being exhaust emissions data predicted to be obtained if a vehicle is driven on a set driving route,
wherein the determining unit is configured to determine whether the predicted exhaust emissions data satisfies the exhaust emissions criterion.

7. The on-road driving test system according to claim 6, further comprising
an actual measured exhaust emissions data storing unit that stores actual measured exhaust emissions data actually measured by one or more vehicles,
wherein the predicted exhaust emissions data calculating unit is configured to, based on the predicted vehicle speed distribution and the actual measured exhaust emissions data, calculate the predicted exhaust emissions data.

8. The on-road driving test system according to any one of claims 1 to 7,
wherein the vehicle speed storing unit stores information in association with the actual measured speed, the information being related to a date and time when the actual measured speed is actually measured, and
wherein a predicted vehicle speed distribution is calculated based on the predicted vehicle speed distribution calculating unit, and, among the actual measured speeds, an actual measured speed corresponding to a date and time when a vehicle is driven on a set driving route.

9. The on-road driving test system according to any one of claims 1 to 8,
wherein the determining unit determines, sequentially during an on-road driving test of a vehicle, whether the predicted vehicle speed distribution satisfies the vehicle speed distribution condition.

10. The on-road driving test system according to claim 2 or 3, wherein the driving route creating unit creates a new driving route during an on-road driving test of a vehicle.

11. The on-road driving test system according to claim 2 or 9, comprising:
a vehicle-side apparatus installed in each of a plurality of vehicles; and
a server including the determination condition storing unit, the vehicle speed storing unit, the predicted vehicle speed distribution calculating unit, the determining unit, and the driving route creating unit,
wherein the vehicle-side apparatus includes
a driving data transmitting unit that transmits driving data to the server, the driving data including at least vehicle location data and vehicle speed, the vehicle location data and vehicle speed being location data and speed of a vehicle during an on-road driving test, and
a driving route display unit that acquires the newly set driving route from the driving route creating unit, and displays the driving route on a display provided to a vehicle, and
wherein the server is configured to receive the driving data transmitted from the vehicle-side apparatus, and update the actual measured vehicle speed stored in the vehicle speed storing unit.

12. The on-road driving test system according to any one of claims 1 to 11,
wherein the determination condition is set based on Moving Average Window (MAW) or Standardized Power Frequency Distribution (SPF).

13. An on-road driving test method comprising:
a predicted vehicle speed distribution calculating step of calculating, based on an actual measured vehicle speed and an estimated vehicle speed, a predicted vehicle speed distribution, the actual measured vehicle speed being a vehicle speed actually measured by one or more vehicles, the estimated vehicle speed being a vehicle speed based on traffic information, the predicted vehicle speed distribution being a vehicle speed distribution predicted to be obtained if a vehicle is driven on a set driving route; and
a determining step of determining whether the predicted vehicle speed distribution satisfies a vehicle speed distribution condition, the vehicle speed distribution condition being a condition for determining whether an on-road driving test is valid.

14. A program for an on-road driving test system, the program causing a computer to function as:
a determination condition storing unit that stores a determination condition, the determination condition including at least a vehicle speed distribution condition for determining whether an on-road driving test is valid;
a vehicle speed storing unit that stores an actual measured vehicle speed or an estimated vehicle speed, the actual measured vehicle speed being a vehicle speed actually measured by one or more vehicles, the estimated vehicle speed being a vehicle speed based on traffic information;
a predicted vehicle speed distribution calculating unit that, based on the actual measured vehicle speed or the estimated vehicle speed, calculates a predicted vehicle speed distribution, the predicted vehicle speed distribution being a vehicle speed distribution predicted to be obtained if a vehicle is driven on a set driving route; and
a determining unit that determines whether the predicted vehicle speed distribution satisfies the vehicle speed distribution condition.

15. A server that transmits and receives data to and from a vehicle-side apparatus installed in a vehicle, and constitutes an on-road driving test system,
the server comprising:
a determination condition storing unit that stores a determination condition, the determination condition including at least a vehicle speed distribution condition for determining whether an on-road driving test is valid;
a vehicle speed storing unit that stores an actual measured vehicle speed or an estimated vehicle speed, the actual measured vehicle speed being a vehicle speed actually measured by one or more vehicles, the estimated vehicle speed being a vehicle speed based on traffic information;
a predicted vehicle speed distribution calculating unit that, based on the actual measured vehicle speed or the estimated vehicle speed, calculates a predicted vehicle speed distribution, the predicted vehicle speed distribution being a vehicle speed distribution predicted to be obtained if a vehicle is driven on a set driving route; and
a determining unit that determines whether the predicted vehicle speed distribution satisfies the vehicle speed distribution condition.

16. A vehicle-side apparatus that is installed in a vehicle, transmits and receives data to and from a server, and constitutes an on-road driving test system, the server including a determination condition storing unit that stores a determination condition, the determination condition including at least a vehicle speed distribution condition for determining whether an on-road driving test is valid, a vehicle speed storing unit that stores an actual measured vehicle speed, the actual measured vehicle speed being a vehicle speed actually measured at each geographical point by one or more vehicles, a predicted vehicle speed distribution calculating unit that, based on the actual measured vehicle speed, calculates a predicted vehicle speed distribution, the predicted vehicle speed distribution being a vehicle speed distribution predicted to be obtained if a vehicle is driven on a set driving route, and a determining unit that determines whether the predicted vehicle speed distribution satisfies the vehicle speed distribution condition,
the vehicle-side apparatus comprising
a driving data transmitting unit that transmits driving data to the server, the driving data including at least vehicle location data and vehicle speed, the vehicle location data and vehicle speed being location data and speed of a vehicle during an on-road driving test.
